(19) Europäisches Patentamt
European Patent Office
Office européen des brevets

(11) **EP 3 360 769 B1**

(12) **EUROPEAN PATENT SPECIFICATION**

(45) Date of publication and mention
of the grant of the patent:
**10.04.2024 Bulletin 2024/15**

(21) Application number: **18155650.7**

(22) Date of filing: **07.02.2018**

(51) International Patent Classification (IPC):
**B62M 6/45** *(2010.01)* **B62M 6/50** *(2010.01)*
**B62M 6/60** *(2010.01)* **B62M 6/75** *(2010.01)*

(52) Cooperative Patent Classification (CPC):
**B62M 6/45; B60L 15/20; B60L 50/20; B62M 6/50;**
**B62M 6/60; B62M 6/75;** B60L 2200/12;
B60L 2240/423; B60L 2250/26; Y02T 10/64;
Y02T 10/72

(54) **ELECTRIC BICYCLE AND METHOD OF CONTROLLING THE SAME**

ELEKTROFAHRRAD UND VERFAHREN ZUR STEUERUNG DAVON

BICYCLETTE ÉLECTRIQUE ET SON PROCÉDÉ DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.02.2017 KR 20170019225**

(43) Date of publication of application:
**15.08.2018 Bulletin 2018/33**

(73) Proprietor: **HL Mando Corporation**
**Pyeongtaek-si, Gyeonggi-do (KR)**

(72) Inventor: **HONG, Kyung-Ho**
**06770 Seoul (KR)**

(74) Representative: **Pfenning, Meinig & Partner mbB**
**Patent- und Rechtsanwälte**
**Joachimsthaler Straße 10-12**
**10719 Berlin (DE)**

(56) References cited:
EP-A1- 2 979 919        EP-A2- 0 784 008
WO-A1-2015/128818        DE-A1- 19 732 468
DE-A1-102013 012 208        US-A1- 2009 095 552
US-A1- 2014 353 055

**Description**

BACKGROUND

1. Field

Embodiments of the present disclosure relate to an electric bicycle and a method of controlling the same, and more particularly, to an electric bicycle having no chain that connects a pedal to wheels, and a method of controlling the same.

2. Description of the Related Art

In general, an electric bicycle includes a motor configured to rotate wheels and a battery configured to supply power to the motor. The electric bicycle travels by rotating the wheels using the motor. In this case, charging of the battery is performed by operating a power generator connected to a pedal due to an operation of rotating the pedal.

The electric bicycle is basically moved by pedaling with two feet, and a chain transfers a force of a person who pedals, to the wheels.

Such a chain has a complicated structure, and the occupying area of the bicycle is large, and the chain may deviate from the wheels, or a passenger's skirt may be caught on the chain or may be contaminated.

In order to solve the problems, electric bicycles having no chain have been recently developed.

In an electric bicycle having no chain, when a driver pedals, a motor mounted on wheels is rotated and moved forward. That is, the electric bicycle having no chain controls a wheel speed according to a pedal speed so that the wheel speed follows the pedal speed at which a pedal is rotated.

Because a conventional electric bicycle controls the wheel speed according to the pedal speed, when the pedal speed is constant, even when a torque applied to the pedal is changed, there is no change in the speed of the bicycle. That is, even when the pedal speed is constant but a large torque is applied to the pedal and the driver has to pedal with a relatively large force, there is no change in the speed of the bicycle.

Thus, in the conventional electric bicycle, a bicycle acceleration sense as if a chain is present in an electric bicycle having no chain may not be provided to the driver.

For example, document EP 0 784 008 A2 describes a bicycle with an electrical generator powered by the cyclist rotating the bicycle pedals, and providing the operating current for at least one electric motor used to drive the bicycle. The generator and the electric motor may be coupled to an electronic control, allowing the ratio between the drive torque delivered to the generator and that provided by the motor to be varied continuously or in stages.

Document WO 2015/128818 A1 describes a drive system wherein a chain power transmission system is replaced by an electric motor and where the electric motor is powered by a generator, and where the generator is connected to a dynamic naturally powered source through a transmission mechanism. The dynamic naturally powered source being, for example, a biologically driven source like the pedals of a bike operated by a human being. This may be directly linked or there may be energy storage means in-between. The generator is capable of adding a controllable counter torque, or more generally a counter force, to the operation of the transmission mechanism and the energy generation in the generator is related to the counter torque.

Document EP 2 979 919 A1 describes an electric vehicle that can offer the same pedal feeling as a vehicle in which a pedal rotation mechanism and a drive wheel are mechanically connected. The vehicle includes crankshafts to which a rotation torque is input through pedals and cranks. In the vehicle, the crankshafts are not connected to a drive wheel via a mechanical transmission mechanism. The vehicle includes a resistance applying unit, which applies resistance to the crankshafts when the pedals are pressed; and a resistance adjustment unit, which adjusts an amount of resistance coming from the resistance applying unit in accordance with torque being input by pumping of the pedals.

Document DE 197 32 468 A1 describes vehicle which includes an electromechanical power transmission from a generator driven through muscle force, at least one electric motor for driving a wheel, and an arrangement for adjusting the drive force. A rechargeable battery is connected with the generator and the electric motor. Sensors for a power measurement are provided in the generator. The arrangement for adjusting the drive force is part of a control circuit, which controls the motor by switching the battery in response to the sensor signals and pre-settable system parameters, in such way, that system losses of the vehicle are compensated.

Document US 2014/353055 A1 describes a drivable exercise machine which may include an electric vehicle with human power input provided by a high output, variable-resistance pedal-driven generator. The vehicle may include a computing device with a user interface that mimics an electric exercise bicycle. Using one or more program modes, a user may activate pre-set, custom and dynamic terrain-based exercise program profiles while commuting.

Document US 2009/095552 A1 describes a vehicle, especially a bicycle, comprising at least one drive wheel, a motor connected to the drive wheel, a power accumulator for supply of the motor, a control device for controlling the motor, and a pedal crank. The pedal crank can be moved independently of the drive wheel and is connected to a braking device that provides a moment of resistance to the rotation of the pedal crank. The moment of resistance of the braking device is controlled by the control device (6). This document is considered the most relevant prior art and discloses the features of the preamble of claims 1 and 4.

Document DE 10 2013 012208 A1 describes an electric drive system for a vehicle driven by muscle power, in particular a bicycle. The electric drive system comprises at least one electric generator mechanically connected to a drive unit, such as a pedal crank, which can be driven by muscle power; an electric drive motor; an electric energy store; and an electric circuit arrangement for electrically coupling the generator to the drive motor and the energy store. The electric circuit arrangement has a rotational speed regulating device and a torque regulating device. The rotational speed of the electric generator is regulated by the rotational speed regulating device such that the rotational speed $nG$ of the electric generator satisfies the condition $nG < kn * nR$, where $nR$ is the rotational speed of a vehicle wheel driven by the electric drive motor and $kN$ is a specified rotational speed conversion factor. The torque $MA$ produced by the drive motor is regulated by the torque regulating device such that the torque $MA$ produced by the electric drive motor satisfies the condition $MA = k\text{-}M * MG$, where $MG$ is the torque produced by the vehicle operator in order to drive the generator and $kM$ is a specified drive torque factor.

## SUMMARY

Therefore, it is an aspect of the present disclosure to provide an electric bicycle capable of provide an acceleration sense as if a chain is present in an electric bicycle to a driver when the driver pedals hard, and a method of controlling the same.

Additional aspects of the present disclosure will be set forth in part in the description which follows and, in part, will be obvious from the description, or may be learned by practice of the disclosure.

The invention is defined in the independent claims. Further aspects and preferred embodiments of the invention are defined in the dependent claims.

In accordance with the invention, an electric bicycle having no chain, includes: a power generator configured to generate a voltage by driving of a pedal; a battery configured to store the voltage generated by the power generator; a motor mounted on at least one of a front wheel and a rear wheel and configured to provide a rotational force to a mounted wheel by power supplied from the battery; a pedal speed sensor configured to sense a speed of the pedal; a motor driver configured to drive the motor; and an electronic control unit configured to drive the motor according to a pedal speed sensed by the pedal speed sensor and to control a current supplied to the motor being driven based on a pedal torque applied to the pedal.

The electric bicycle further includes a battery voltage sensor configured to sense a battery voltage charged in the battery and a power generation current sensor configured to sense a power generation current generated in the power generator, wherein the electronic control unit, or alternatively a pedal torque estimator of the electric bicycle, estimates the pedal torque applied to the pedal based on the pedal speed sensed by the pedal speed sensor, the battery voltage sensed by the battery voltage sensor, and the power generation current sensed by the power generation current sensor.

The electronic control unit may supply a motor current corresponding to the sensed pedal speed to the motor using the motor driver, and if the pedal torque applied to the pedal is greater than a preset pedal torque, the electronic control unit may increase a current supplied to the motor.

The electronic control unit calculates a target wheel speed so as to follow a pedal speed sensed by the pedal speed sensor, to calculate a target motor current according to the calculated target wheel speed, to supply a current to the motor using the motor driver so as to reach the calculated target motor current, to change the calculated target wheel speed based on a pedal torque applied to the pedal, to change the target motor current according to the changed target wheel speed, and to change the current supplied to the motor using the motor driver so as to reach the changed target motor current.

In accordance with the invention, a method of controlling an electric bicycle having no chain including a power generator configured to generate a voltage by driving of a pedal, a battery configured to store the voltage generated by the power generator, and a motor mounted on a rear wheel and configured to provide a rotational force to the rear wheel by power supplied from the battery, includes: sensing a speed of the pedal using a pedal speed sensor; calculating a target rear wheel speed according to the sensed pedal speed; driving the motor using a motor driver according to the target rear wheel speed; controlling the current supplied to the motor to reach a target motor current corresponding to the calculated target rear wheel speed.

The method further includes sensing the speed of the pedal using the pedal speed sensor, sensing a battery voltage charged in the battery using a battery voltage sensor, sensing a power generation current generated in the power generator using a power generation current sensor, and estimating a pedal torque applied to the pedal based on the sensed pedal speed, battery voltage and power generation current.

The method may further include, if the pedal torque applied to the pedal is greater than a preset pedal torque, increasing a current supplied to the motor to be greater than a motor current corresponding to the sensed pedal speed.

The method further includes, changing the target rear wheel speed based on the estimated torque applied to the pedal, changing the target rear wheel speed based on the estimated pedal torque applied to the pedal; driving the motor using the motor driver, according to the changed target rear wheel speed, by controlling the current supplied to the motor as to reach the changed target motor current corresponding to the changed target rear wheel speed.

BRIEF DESCRIPTION OF THE DRAWINGS

These and/or other aspects of the present disclosure will become apparent and more readily appreciated from the following description of the embodiments of the invention and additional examples, taken in conjunction with the accompanying drawings of which:

FIG. 1 is a perspective view of an electric bicycle according to an embodiment of the present invention;

FIG. 2 is a control block diagram of the electric bicycle according to an example of the present disclosure which does not form part of the present invention;

FIG. 3 is a control block diagram of an electric bicycle according to another embodiment of the present invention;

FIG. 4 is a view for explaining estimating a torque applied to a pedal based on a rotation speed of the pedal, a voltage of a battery and a power generation current of a power generator and changing a motor current according to the estimated pedal torque in the electric bicycle according to another embodiment of the present invention; and

FIG. 5 is a control flowchart of the electric bicycle according to another embodiment of the present invention.

DETAILED DESCRIPTION

The present disclosure will now be described more fully with reference to the accompanying drawings 1 and 3 to 5, in which exemplary embodiments of the invention are shown. Drawing 2 shows an example of the present disclosure which does not form part of the claimed invention. The following embodiments are provided so that this disclosure will be thorough and complete, and will fully convey the concept of the present disclosure to those skilled in the art. The present disclosure may, however, be embodied in many different forms and should not be construed as being limited to the embodiments set forth herein. For clarity, irrelevant portions to descriptions are omitted in the drawings. In the drawings, widths, lengths, and thicknesses of elements may be exaggerated for convenience. Like reference numerals throughout the drawings represent like elements.

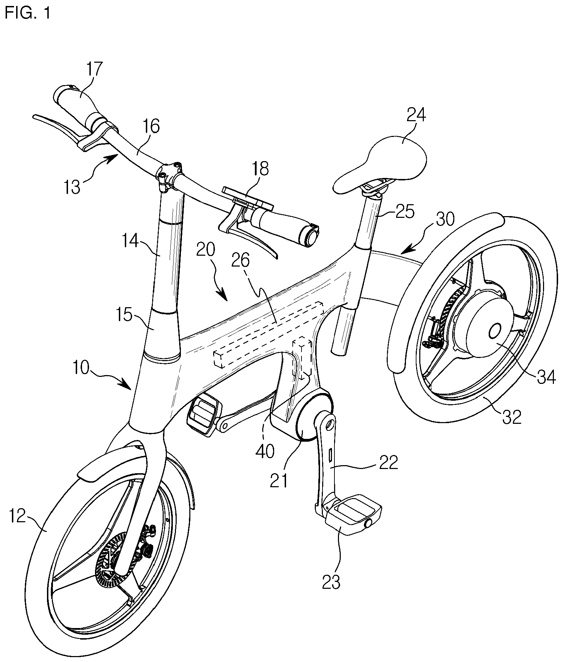

FIG. 1 is a perspective view of an electric bicycle according to an embodiment of the present disclosure.

Referring to FIG. 1, the electric bicycle according to an embodiment of the present disclosure as a chainless electric bicycle may include a front frame 10, a middle frame 20, and a rear frame 30.

The front frame 10 may include a front wheel 12, and a handle stay 14 to which a handle part 13 is connected.

The handle part 13 may include a handle stem 15 coupled to a bottom end of the handle stay 14, a handle bar 16 coupled to the handle stay 14, and a handle grip 17 installed on the handle bar 16.

The front wheel 12 is rotatably coupled to one side of the bottom end of the handle stay 14. The handle stem 15 is provided to adjust the height of the handle part 13. The handle bar 16 is provided to determine steering of the electric bicycle. An interface 18 is placed on the handle grip 17 as to display the state of the electric bicycle to a user and to transfer the user's needs to an electronic control unit 40 via a button or display. The interface 18 is electrically connected to the electronic control unit 40 in a wired or wireless manner.

A power generator 21 is placed at one end of the middle frame 20, and a pedal 23 is rotatably mounted on both sides of the power generator 21 due to a crank arm 22. One end of the crank arm 22 is rotatably coupled to a pedal shaft of the middle frame 20, and the other end of the crank arm 22 is rotatably coupled to the pedal 23. When a passenger rotates the pedal 23, a rotational force of the pedal 23 may be converted into electric energy in the power generator 21, and the electric energy of the power generator 21 may be charged in a battery 26 placed at the middle frame 20. The battery 26 may operate a motor 34 by applying a current to the motor 34 so that a rotational force can be provided to a rear wheel 32.

The middle frame 20 may further include a saddle tube 25 for installing a saddle 24.

The rear wheel 32 is rotatably mounted on one side of an end of the rear frame 30. The motor 34 for moving the electric bicycle forward by rotating the rear wheel 32 is mounted on the center of the rear wheel 32. The motor 34 may include a transmission through which the passenger is able to change a rotation speed of the rear wheel 32 using the interface 18 or a throttle.

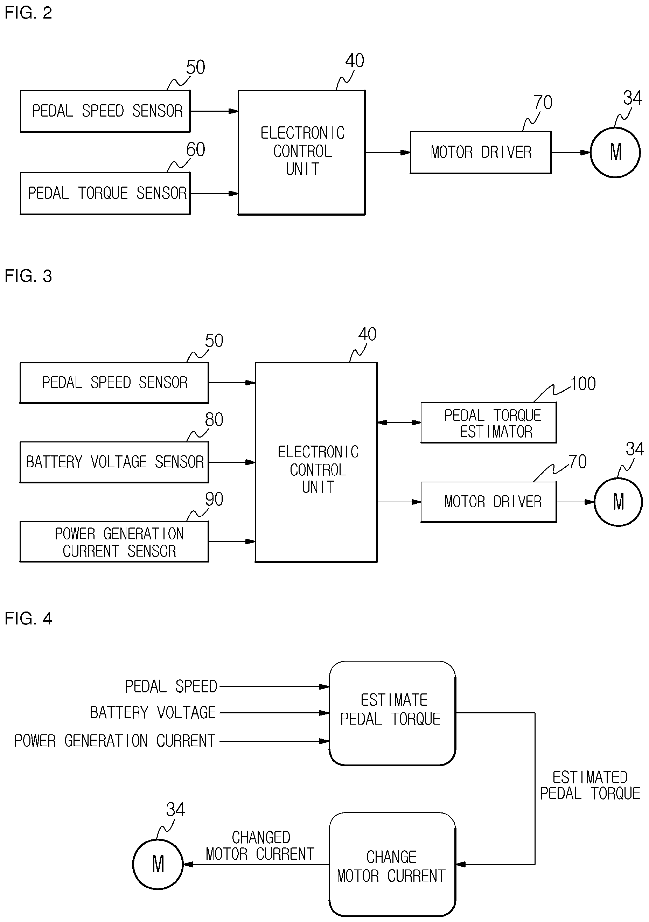

FIG. 2 is a control block diagram of the electric bicycle according to an example of the present disclosure which does not form part of the present invention.

Referring to FIG. 2, the electric bicycle may further include the electronic control unit 40, a pedal speed sensor 50, a pedal torque sensor 60, and a motor driver 70.

The pedal speed sensor 50, the pedal torque sensor 60, and the motor driver 70 are electrically connected to the electronic control unit 40.

The pedal speed sensor 50 senses a rotation speed of the pedal 23.

The pedal speed sensor 50 may be placed at the crank arm 22, the pedal 23, or a frame of the electric bicycle at a similar position to that of the crank arm 22 or the pedal 23.

The pedal torque sensor 60 may include a torque sensor placed on a pedal axis of the middle frame 20. The torque sensor senses a force for rotating the pedal 23 by a driver, i.e., a pedal torque. A signal indicating the pedal torque sensed by the pedal torque sensor 60 is transmitted to the electronic control unit 40.

The motor driver 70 drives the motor 34.

The motor driver 70 adjusts the rotation speed of the motor 34 according to a control signal of the electronic control unit 40.

The motor driver 70 may adjust the rotation speed of the motor 34 by adjusting a current of power supplied to the motor 34.

The motor driver 70 may adjust the rotation speed of the motor 34 by converting the number of poles of the motor 34 or changing a frequency of power supplied to the motor 34.

The electronic control unit 40 controls the rotation speed of the motor 34 using the motor driver 70 based on the pedal speed sensed by the pedal speed sensor 50, thereby rotating the rear wheel 32. That is, the electronic control unit 40 controls the current supplied to the motor 34 so that the rotation speed of the rear wheel 32 (or the rotation speed of the motor 34) follows the pedal speed, thereby controlling an operation of the motor 34. In this case, the electronic control unit 40 controls the current supplied to the motor 34 according to the pedal torque sensed by the pedal torque sensor 60, thereby adjusting the rotation speed of the motor 34.

The electronic control unit 40 increase a current value supplied to the motor 34 as the pedal torque value increases, and reduces the current value supplied to the motor 34 as the pedal torque value decreases.

Thus, as the pedal torque increases, the rotation speed of the motor 34 that follows the pedal speed is increased, and as the pedal torque decreases, the rotation speed of the motor 34 that follows the pedal speed is decreased. Thus, the speed of the electric bicycle can be changed using the torque applied to the pedal so that an acceleration sense as if a chain is present in the electric bicycle, when a driver pedals, can be provided to the driver.

FIG. 3 is a control block diagram of an electric bicycle according to an embodiment of the present invention, and FIG. 4 is a view for explaining estimating a torque applied to a pedal based on a rotation speed of the pedal, a voltage of a battery and a power generation current of a power generator and changing a motor current according to the estimated pedal torque in the electric bicycle according to another embodiment of the present invention.

Referring to FIGS. 3 and 4, the electric bicycle according to an embodiment of the present invention includes an electronic control unit 40, a pedal speed sensor 50, a motor driver 70, a battery voltage sensor 80, a power generation current sensor 90, and a pedal torque estimator 100.

The battery voltage sensor 80 senses a battery voltage charged in the battery 26.

The power generation current sensor 90 senses a power generation current generated in the power generator 21. The power generation current is generated in and output from the power generator 21.

The pedal torque estimator 100 estimates a torque applied to a pedal based on the speed of the pedal 23, the voltage of the battery 26, and the power generation current of the power generator 21. Because the torque applied to the pedal is estimated based on the rotation speed of the pedal 23, the voltage of the battery 26 and the power generation current of the power generator 21, the torque applied to the pedal 23 can be estimated without an additional torque sensor.

The pedal torque may be calculated using the following Equation [1]:

$$\text{pedal torque} = \frac{battery\ voltage \times power\ generation\ current \times 60}{pedal\ speed \times 2\pi \times efficiency}$$

, where efficiency is a preset constant.

While rotating the rear wheel 32 by operating the motor 34 using the motor driver 70 based on the pedal speed sensed by the pedal speed sensor 50, if the pedal torque sensed by the pedal torque sensor 60 is greater than a reference pedal torque as a preset pedal torque, the electronic control unit 40 may increase a current supplied to the motor 34 to be greater than a motor current corresponding to the pedal speed as to increase the rotation speed of the motor 34 to be greater than a motor speed corresponding to the pedal speed.

Also, if the pedal torque is greater than the reference pedal torque and becomes smaller than the reference pedal torque, the electronic control unit 40 may decrease the current supplied to the motor 34 to be smaller than the motor current corresponding to the pedal speed as to decrease the rotation speed of the motor 34 to be smaller than the motor speed corresponding to the pedal speed.

If the pedal torque is smaller than the reference pedal torque, the electronic control unit 40 may not decrease the current supplied to the motor 34 as to maintain the current supplied to the motor 34 to be the motor current corresponding to the pedal speed.

Thus, because the speed of the electric bicycle can be changed using the torque applied to the pedal, an acceleration sense as if a chain is present in the electric bicycle when the driver pedals, can be provided to the driver.

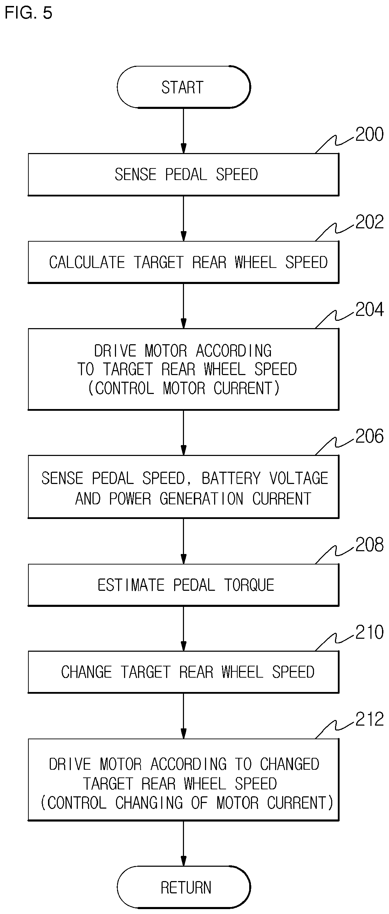

FIG. 5 is a control flowchart of the electric bicycle according to another embodiment of the present invention.

Referring to FIG. 5, the electronic control unit 40 senses a pedal speed using the pedal speed sensor 50 (Operation 200).

The electronic control unit 40 calculates a target rear wheel speed according to the pedal speed sensed in Operation 200 (Operation 202). For example, the electronic control unit 40 may acquire a rear wheel speed corresponding to the sensed pedal speed using a table in which the rear wheel speed corresponding to the pedal speed is previously stored, and may recognize or calculate the acquired rear wheel speed as the target rear wheel speed.

The electronic control unit 40 drives the motor 34 using the motor driver 70 according to the calculated target rear wheel speed (Operation 204). The electronic control unit 40 controls the current supplied to the motor 34 to reach a target motor current corresponding to the calculated target rear wheel speed. Thus, the rear wheel of the electric bicycle is rotated to reach the target rear wheel speed.

The electronic control unit 40 senses the pedal speed using the pedal speed sensor 50, senses a battery voltage using the battery voltage sensor 80, and senses a power generation current using the power generation current sensor 90 (Operation 206).

The electronic control unit 40 estimates a pedal torque based on the sensed pedal speed, battery voltage and power generation current (Operation 208). In this case, the electronic control unit 40 may calculate the pedal torque using the above-described Equation [1].

The electronic control unit 40 changes the target rear wheel speed based on the estimated pedal torque (Operation 210). In this case, if the estimated pedal torque is greater than the reference pedal torque, the electronic control unit 40 increases the target rear wheel speed in the control state by speed corresponding to a difference between the estimated pedal torque and the reference pedal torque. Also, if the estimated pedal torque is smaller than the reference pedal torque, the electronic control unit 40 may decrease the target rear wheel speed by the speed corresponding to the difference between the estimated pedal torque and the reference pedal torque or may maintain the target rear wheel speed to be the rear wheel speed corresponding to the pedal speed.

The electronic control unit 40 drives the motor 34 using the motor driver 70 according to the changed target rear wheel speed (Operation 212). That is, the electronic control unit 40 controls the current supplied to the motor 34 as to reach the changed target motor current corresponding to the changed target rear wheel speed.

As is apparent from the above description, in an electric bicycle and a method of controlling the same according to one or more embodiments of the present invention, an acceleration sense as if a chain is present in the electric bicycle having no chain when a driver pedals hard, can be provided to the driver by changing the speed of the electric bicycle that follows the pedal speed using a torque applied to a pedal when the speed of the electric bicycle is controlled by following the pedal speed.

In addition, in the electric bicycle and the method of controlling the same according to one or more embodiments of the present disclosure, the torque applied to the pedal is estimated based on a rotation speed of the pedal, a voltage of a battery and an output current of a power generator so that, even when there is no additional torque sensor, the torque applied to the pedal can be estimated.

Although a few embodiments of the present invention have been shown and described, it would be appreciated by those skilled in the art that changes may be made in these embodiments without departing from the disclosure, the scope of which is defined in the claims.

**Claims**

1. An electric bicycle having no chain, comprising:

   a power generator (21) configured to generate a voltage by driving of a pedal (23);
   a power generation current sensor (90) configured to sense a power generation current generated in the power generator (21);
   a battery (26) configured to store the voltage generated by the power generator (21);

a battery voltage sensor (80) configured to sense a battery voltage charged in the battery (26);
a motor (34) mounted on at least one of a front wheel (12) and a rear wheel (32) and configured to provide a rotational force to a mounted wheel (12, 32) by power supplied from the battery (26);
a pedal speed sensor (50) configured to sense a speed of the pedal (23);
a motor driver (70) configured to drive the motor (34); and
an electronic control unit (40) configured to drive the motor (34) according to a pedal (23) speed sensed by the pedal speed sensor (50) and to control a current supplied to the motor (34) being driven based on a pedal torque applied to the pedal (23),
wherein the electronic control unit (40) calculates a target wheel speed so as to follow a pedal speed sensed by the pedal speed sensor (50), to calculate a target motor current according to the calculated target wheel speed, to supply a current to the motor (34) using the motor driver (70) so as to reach the calculated target motor current,
**characterized in that**
the electronic control unit (40), or alternatively a pedal torque estimator (100) of the electric bicycle, estimates the pedal torque applied to the pedal (23) based on the pedal speed sensed by the pedal speed sensor (50), the battery voltage sensed by the battery voltage sensor (80), and the power generation current sensed by the power generation current sensor (90), and
wherein the electronic control unit (40) is further configured to change the calculated target wheel speed based on the estimated pedal torque applied to the pedal (23), to change the target motor current according to the changed target wheel speed, and to change the current supplied to the motor (34) using the motor driver (70) so as to reach the changed target motor current.

2. The electric bicycle according to claim 1, wherein the electronic control unit (40) is configured to calculate the pedal torque using the equation:

$$\text{pedal torque} = \frac{battery\ voltage \times power\ generation\ current \times 60}{pedal\ speed \times 2\pi \times efficiency},$$

where efficiency is a preset constant.

3. The electric bicycle according to any one of the preceding claims, wherein the electronic control unit (40) supplies a motor current corresponding to the sensed pedal speed to the motor (34) using the motor driver (70), and if the pedal torque applied to the pedal (23) is greater than a preset pedal torque, the electronic control unit (40) increases a current supplied to the motor (34).

4. A method of controlling an electric bicycle having no chain including a power generator (21) configured to generate a voltage by driving of a pedal (23), a battery (26) configured to store the voltage generated by the power generator (21), and a motor (34) mounted on a rear wheel (32) and configured to provide a rotational force to the rear wheel (32) by power supplied from the battery (26), the method comprising:

sensing a speed of the pedal (23) using a pedal speed sensor;
calculating a target rear wheel speed according to the sensed pedal speed;
driving the motor (34) using a motor driver (70) according to the target rear wheel speed;
controlling the current supplied to the motor (34) to reach a target motor current corresponding to the calculated target rear wheel speed;
sensing the speed of the pedal (23) using the pedal speed sensor (50),
sensing a battery (26) voltage using a battery voltage sensor (80), sensing a power generation current generated in the power generator (21) using a power generation current sensor (90); **characterized by** the method further comprising
estimating a pedal torque applied to the pedal (23) based on the sensed pedal speed, battery voltage and power generation current;
changing the target rear wheel speed based on the estimated pedal torque applied to the pedal (23);
driving the motor (34) using the motor driver (70), according to the changed target rear wheel speed, by controlling the current supplied to the motor (34) as to reach the changed target motor current corresponding to the changed target rear wheel speed.

5. The method according to claim 4, further comprising, if the pedal torque applied to the pedal (23) is greater than a preset pedal torque, increasing a current supplied to the motor (34) to be greater than a motor current corresponding to the sensed pedal speed.

6. The method according to any one of claims 4 and 5, further comprising using the equation

$$\text{pedal torque} = \frac{battery\ voltage \times power\ generation\ current \times 60}{pedal\ speed \times 2\pi \times efficiency}$$

to calculate the pedal torque, where efficiency is a preset constant.

**Patentansprüche**

1. Elektrisches Fahrrad ohne Kette, umfassend:

einen Stromgenerator (21), der eingerichtet ist, durch den Antrieb eines Pedals (23) eine Spannung zu erzeugen;
einen Stromerzeugungsstromsensor (90), der eingerichtet ist, einen in dem Stromgenerator (21) erzeugten Stromerzeugungsstrom zu erfassen;
eine Batterie (26), die eingerichtet ist, die von dem Stromgenerator (21) erzeugte Spannung zu speichern;
einen Batteriespannungssensor (80), der eingerichtet ist, eine in der Batterie (26) gespeicherte Batteriespannung zu erfassen;
einen Motor (34), der an mindestens einem von einem Vorderrad (12) und einem Hinterrad (32) angebracht ist und eingerichtet ist, durch die von der Batterie (26) gelieferte Energie an einem angebrachten Rad (12, 32) Rotationskraft auszuüben;
einen Pedalgeschwindigkeitssensor (50), der eingerichtet ist, eine Geschwindigkeit des Pedals (23) zu erfassen;
einen Motortreiber (70), der zum Ansteuern des Motors (34) eingerichtet ist; und
eine elektronische Steuereinheit (40), die eingerichtet ist, den Motor (34) entsprechend einer vom Pedalgeschwindigkeitssensor (50) erfassten Geschwindigkeit des Pedals (23) anzusteuern und einen dem angesteuerten Motor (34) zugeführten Strom auf der Grundlage eines auf das Pedal (23) ausgeübten Pedaldrehmoments zu steuern,
wobei die elektronische Steuereinheit (40) eine Soll-Radgeschwindigkeit berechnet, um einer Pedalgeschwindigkeit zu folgen, die von dem Pedalgeschwindigkeitssensor (50) erfasst wird, um einen Soll-Motorstrom gemäß der berechneten Soll-Radgeschwindigkeit zu berechnen, um einen Strom an den Motor (34) unter Verwendung des Motortreibers (70) zu liefern, um den berechneten Soll-Motorstrom zu erreichen,
**dadurch gekennzeichnet, dass**
die elektronische Steuereinheit (40) oder alternativ ein Pedaldrehmomentschätzer (100) des elektrischen Fahrrads das auf das Pedal (23) ausgeübte Pedaldrehmoment auf der Grundlage der von dem Pedalgeschwindigkeitssensor (50) erfassten Pedalgeschwindigkeit, der von dem Batteriespannungssensor (80) erfassten Batteriespannung und des von dem Stromerzeugungsstromsensor (90) erfassten Stroms schätzt, und
wobei die elektronische Steuereinheit (40) ferner eingerichtet ist, die berechnete Soll-Radgeschwindigkeit auf der Grundlage des geschätzten Pedaldrehmoments, das auf das Pedal (23) ausgeübt wird, zu ändern, den Soll-Motorstrom entsprechend der geänderten Soll-Radgeschwindigkeit zu ändern und den Strom, der dem Motor (34) unter Verwendung des Motortreibers (70) zugeführt wird, zu ändern, um den geänderten Soll-Motorstrom zu erreichen.

2. Elektrisches Fahrrad nach Anspruch 1, wobei die elektronische Steuereinheit (40) eingerichtet ist, das Pedaldrehmoment unter Verwendung der Gleichung zu berechnen:

$$\text{Pedaldrehmoment} = \frac{Batteriespannung \times Stromerzeugungsstrom \times 60}{Pedalgeschwindigkeit \times 2\pi \times Wirkungsgrad},$$

wobei der Wirkungsgrad eine voreingestellte Konstante ist.

3. Elektrisches Fahrrad nach einem der vorhergehenden Ansprüche, wobei die elektronische Steuereinheit (40) dem Motor (34) unter Verwendung des Motortreibers (70) einen Motorstrom zuführt, der der erfassten Pedalgeschwindigkeit entspricht, und wenn das auf das Pedal (23) ausgeübte Pedaldrehmoment größer ist als ein voreingestelltes Pedaldrehmoment, erhöht die elektronische Steuereinheit (40) einen dem Motor (34) zugeführten Strom.

4. Verfahren zum Steuern eines Elektrofahrrads ohne Kette, enthaltend einen Stromgenerator (21), der eingerichtet ist, durch den Antrieb eines Pedals (23) eine Spannung zu erzeugen, eine Batterie (26), die eingerichtet ist, die von dem Stromgenerator (21) erzeugte Spannung zu speichern, und einen Motor (34), der an einem Hinterrad (32) angebracht und eingerichtet ist, durch die von der Batterie (26) zugeführte Energie auf das Hinterrad (32) eine Drehkraft auszuüben, wobei das Verfahren umfasst:

Erfassen der Geschwindigkeit des Pedals (23) mit Hilfe eines Pedalgeschwindigkeitssensors;
Berechnen einer Soll-Hinterradgeschwindigkeit entsprechend der gemessenen Pedalgeschwindigkeit;
Ansteuern des Motors (34) über einen Motortreiber (70) in Abhängigkeit von der Soll-Hinterradgeschwindigkeit;
Steuern des dem Motor (34) zugeführten Stroms, um einen Motor-Sollstrom zu erreichen, der der berechneten Hinterrad-Sollgeschwindigkeit entspricht;
Erfassen der Geschwindigkeit des Pedals (23) mit Hilfe des Geschwindigkeitssensors (50),
Erfassen einer Spannung der Batterie (26) mit Hilfe eines Batteriespannungssensors (80), Erfassen eines im Stromgenerator (21) erzeugten Stromerzeugungsstroms mit Hilfe eines Stromerzeugungsstromsensors (90);
**dadurch gekennzeichnet, dass** das Verfahren ferner umfasst:

Schätzen eines auf das Pedal (23) ausgeübten Pedaldrehmoments auf der Grundlage der gemessenen Pedalgeschwindigkeit, der Batteriespannung und des Stromerzeugungsstroms;
Ändern der Soll-Hinterradgeschwindigkeit auf der Grundlage des geschätzten Pedaldrehmoments, das auf das Pedal (23) ausgeübt wird;
Ansteuern des Motors (34) unter Verwendung des Motortreibers (70) entsprechend der geänderten Soll-Hinterradgeschwindigkeit, indem der dem Motor (34) zugeführte Strom so gesteuert wird, dass der geänderte Soll-Motorstrom entsprechend der geänderten Soll-Hinterradgeschwindigkeit erreicht wird.

5. Verfahren nach Anspruch 4, ferner umfassend, dass, wenn das auf das Pedal (23) ausgeübte Pedaldrehmoment größer ist als ein voreingestelltes Pedaldrehmoment, ein dem Motor (34) zugeführter Strom so erhöht wird, dass er größer ist als ein der erfassten Pedalgeschwindigkeit entsprechender Motorstrom.

6. Verfahren nach einem der Ansprüche 4 und 5, ferner umfassend die Verwendung der Gleichung

$$\text{Pedaldrehmoment} = \frac{Batteriespannung \times Stromerzeugungsstrom \times 60}{Pedalgeschwindigkeit \times 2\pi \times Wirkungsgrad},$$

um das Pedaldrehmoment zu berechnen, wobei der Wirkungsgrad eine voreingestellte Konstante ist.

**Revendications**

1. Bicyclette électrique ne comportant pas de chaîne, comprenant :

un générateur de puissance (21) configuré pour générer une tension au moyen de l'entraînement d'une pédale (23) ;
un capteur de courant de génération de puissance (90) configuré pour détecter un courant de génération de puissance généré dans le générateur de puissance (21) ;
une batterie (26) configurée pour stocker la tension générée par le générateur de puissance (21) ;
un capteur de tension de batterie (80) configuré pour détecter une tension de batterie chargée dans la batterie (26) ;
un moteur (34) monté sur au moins une roue parmi une roue avant (12) et une roue arrière (32) et configuré pour fournir une force de rotation à une roue montée (12, 32) au moyen de la puissance alimentée depuis la batterie (26) ;
un capteur de vitesse de pédale (50) configuré pour détecter une vitesse de la pédale (23) ;
un moyen d'entraînement de moteur (70) configuré pour entraîner le moteur (34) ; et
une unité de commande électronique (40) configurée pour entraîner le moteur (34) en fonction d'une vitesse de la pédale (23) détectée par le capteur de vitesse de pédale (50) et pour commander un courant alimenté sur le moteur (34) qui est entraîné sur la base d'un couple de pédale appliqué sur la pédale (23),

dans laquelle l'unité de commande électronique (40) calcule une vitesse de roue cible de manière à ce qu'elle suive une vitesse de pédale détectée par le capteur de vitesse de pédale (50), pour calculer un courant de moteur cible en fonction de la vitesse de roue cible calculée, pour alimenter un courant sur le moteur (34) en utilisant le moyen d'entraînement de moteur (70) de manière à ce qu'il atteigne le courant de moteur cible calculé, **caractérisée en ce que** :

l'unité de commande électronique (40) ou, à titre d'alternative, un moyen d'estimation de couple de pédale (100) de la bicyclette électrique, estime le couple de pédale appliqué sur la pédale (23) sur la base de la vitesse de pédale détectée par le capteur de vitesse de pédale (50), de la tension de batterie détectée par le capteur de tension de batterie (80) et du courant de génération de puissance détecté par le capteur de courant de génération de puissance (90) ; et

dans laquelle l'unité de commande électronique (40) est en outre configurée pour modifier la vitesse de roue cible calculée sur la base du couple de pédale estimé appliqué sur la pédale (23), pour modifier le courant de moteur cible en fonction de la vitesse de roue cible modifiée et pour modifier le courant alimenté sur le moteur (34) en utilisant le moyen d'entraînement de moteur (70) de manière à ce qu'il atteigne le courant de moteur cible modifié.

2. Bicyclette électrique selon la revendication 1, dans laquelle l'unité de commande électronique (40) est configurée pour calculer le couple de pédale en utilisant l'équation :

$$\text{couple de pédale} = \frac{\text{tension de batterie} \times \text{courant de génération de puissance} \times 60}{\text{vitesse de pédale} \times 2\pi \times \text{rendement}},$$

équation dans laquelle le rendement est une constante prédéfinie.

3. Bicyclette électrique selon l'une quelconque des revendications précédentes, dans laquelle l'unité de commande électronique (40) alimente un courant de moteur qui correspond à la vitesse de pédale détectée sur le moteur (34) en utilisant le moyen d'entraînement de moteur (70) et si le couple de pédale appliqué sur la pédale (23) est supérieur à un couple de pédale prédéfini, l'unité de commande électronique (40) augmente un courant alimenté sur le moteur (34).

4. Procédé de commande d'une bicyclette électrique ne comportant pas de chaîne et incluant un générateur de puissance (21) configuré pour générer une tension au moyen de l'entraînement d'une pédale (23), une batterie (26) configurée pour stocker la tension générée par le générateur de puissance (21) et un moteur (34) monté sur une roue arrière (32) et configuré pour fournir une force de rotation à la roue arrière (32) au moyen de la puissance alimentée depuis la batterie (26), le procédé comprenant :

la détection d'une vitesse de la pédale (23) en utilisant un capteur de vitesse de pédale ;

le calcul d'une vitesse de roue arrière cible en fonction de la vitesse de pédale détectée ;

l'entraînement du moteur (34) en utilisant un moyen d'entraînement de moteur (70) en fonction de la vitesse de roue arrière cible ;

la commande du courant alimenté sur le moteur (34) pour qu'il atteigne un courant de moteur cible correspondant à la vitesse de roue arrière cible calculée ;

la détection de la vitesse de la pédale (23) en utilisant le capteur de vitesse de pédale (50) ; et

la détection d'une tension de la batterie (26) en utilisant un capteur de tension de batterie (80) et la détection d'un courant de génération de puissance généré dans le générateur de puissance (21) en utilisant un capteur de courant de génération de puissance (90) ;

**caractérisé en ce que** le procédé comprend en outre :

l'estimation d'un couple de pédale appliqué sur la pédale (23) sur la base de la vitesse de pédale détectée, de la tension de batterie détectée et du courant de génération de puissance détecté ;

la modification de la vitesse de roue arrière cible sur la base du couple de pédale estimé qui est appliqué sur la pédale (23) ; et

l'entraînement du moteur (34) en utilisant le moyen d'entraînement de moteur (70), en fonction de la vitesse de roue arrière cible modifiée, en commandant le courant alimenté sur le moteur (34) de manière à ce qu'il atteigne le courant de moteur cible modifié correspondant à la vitesse de roue arrière cible modifiée.

**5.** Procédé selon la revendication 4, comprenant en outre, si le couple de pédale appliqué sur la pédale (23) est supérieur à un couple de pédale prédéfini, l'augmentation d'un courant alimenté sur le moteur (34) de telle sorte qu'il soit supérieur à un courant de moteur correspondant à la vitesse de pédale détectée.

**6.** Procédé selon l'une quelconque des revendications 4 et 5, comprenant en outre l'utilisation de l'équation :

$$\text{couple de pédale} = \frac{\textit{tension de batterie x courant de génération de puissance} \times 60}{\textit{vitesse de pédale} \times 2\pi \times \textit{rendement}},$$

pour calculer le couple de pédale, équation dans laquelle le rendement est une constante prédéfinie.

FIG. 1

FIG. 2

```
  ┌──────────────────────┐ 50        ┌──────────────┐ 40
  │  PEDAL SPEED SENSOR  │────────▶   │  ELECTRONIC  │
  └──────────────────────┘           │   CONTROL    │           ┌──────────────┐ 70      ┌───┐ 34
                                      │     UNIT     │────────▶  │ MOTOR DRIVER │────────▶│ M │
  ┌──────────────────────┐ 60        │              │           └──────────────┘         └───┘
  │ PEDAL TORQUE SENSOR  │────────▶   └──────────────┘
  └──────────────────────┘
```

FIG. 3

```
  ┌──────────────────────┐ 50                                   ┌──────────────────┐ 100
  │  PEDAL SPEED SENSOR  │────────▶                      ◀──────▶│  PEDAL TORQUE    │
  └──────────────────────┘           ┌──────────────┐ 40        │    ESTIMATOR     │
                                      │  ELECTRONIC  │           └──────────────────┘
  ┌──────────────────────┐ 80        │   CONTROL    │
  │ BATTERY VOLTAGE SENSOR│────────▶  │     UNIT     │           ┌──────────────┐ 70      ┌───┐ 34
  └──────────────────────┘           │              │────────▶  │ MOTOR DRIVER │────────▶│ M │
                                      │              │           └──────────────┘         └───┘
  ┌──────────────────────┐ 90        └──────────────┘
  │  POWER GENERATION    │────────▶
  │   CURRENT SENSOR     │
  └──────────────────────┘
```

FIG. 4

```
         PEDAL SPEED ──────────────▶   ┌─────────────┐
     BATTERY VOLTAGE ──────────────▶   │  ESTIMATE   │
POWER GENERATION CURRENT ──────────▶   │ PEDAL TORQUE│──────┐
                                       └─────────────┘      │ ESTIMATED
                                                            │ PEDAL TORQUE
              34                                            │
             ┌───┐    CHANGED          ┌─────────────┐      │
             │ M │◀── MOTOR CURRENT ───│   CHANGE    │◀─────┘
             └───┘                     │MOTOR CURRENT│
                                       └─────────────┘
```

13

FIG. 5

START

SENSE PEDAL SPEED /200

CALCULATE TARGET REAR WHEEL SPEED /202

DRIVE MOTOR ACCORDING
TO TARGET REAR WHEEL SPEED
(CONTROL MOTOR CURRENT) /204

SENSE PEDAL SPEED, BATTERY VOLTAGE
AND POWER GENERATION CURRENT /206

ESTIMATE PEDAL TORQUE /208

CHANGE TARGET REAR WHEEL SPEED /210

DRIVE MOTOR ACCORDING TO CHANGED
TARGET REAR WHEEL SPEED
(CONTROL CHANGING OF MOTOR CURRENT) /212

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0784008 A2
- WO 2015128818 A1
- EP 2979919 A1
- DE 19732468 A1
- US 2014353055 A1
- US 2009095552 A1
- DE 102013012208 A1